# EUROPEAN PATENT APPLICATION

(11) **EP 0 604 129 A1**
(43) Date of publication of application: **29.06.1994**
(21) Application number: 93310208.9
(22) Date of filing: 17.12.1993
(51) Int. Cl.: B29C 67/22, B29C 47/10, B29B 13/00, B29K 25/00, B29K 71/00, B29K 105/04, B29K 105/34

(54) **Method and apparatus for producing foam with reduced thermal conductivity**

(30) Priority: 24.12.1992 US 997391
(71) Applicant: GENERAL ELECTRIC COMPANY, Schenectady, NY 12345 (US)
(72) Inventor: Jaster, Heinz, Schenectady, New York 12306 (US)
(74) Representative: Pratt, Richard Wilson

(57) **Abstract**

The thermal conductivity of a foam is lowered by increasing the cell gas concentration of the foam. A foam extruder having a container for feeding polymer pellets to the extruder and an injector for injecting a blowing agent into the extruder is provided with an inlet port for injecting a high molecular weight gas into the container. The injection of the high molecular weight gas purges air from the container, thereby preventing air from being ingested by the extruder with the polymer pellets. This results in a higher cell gas concentration which lowers the thermal conductivity of the foam. The high molecular weight gas is preferably selected from the group including chlorofluorocarbons, hydrofluorocarbons, xenon, and perfluorinated fluorocarbons.

## Description

### Background of the Invention

This invention relates generally to the manufacture of polymer foams and more particularly concerns low thermal conductivity foam boards for use as thermal insulation. Such foam boards would be particularly applicable to the production of refrigerator walls.

Current refrigerator walls typically consist of an outer layer of sheet metal and an inner layer of a dense plastic material which forms the lining of the refrigerated compartment. A polyurethane foam board is disposed between the two layers to provide thermal insulation. However, foams containing a polymer which is a blend of polyphenylene oxide (PPO) and polystyrene (PS) have been shown to have greater mechanical strength than polyurethane-based foams. This polymer (referred to hereinafter as PPO/PS polymer) is sold under the trademark NORYL® by the General Electric Company. PPO/PS polymer foam boards can be extruded in such a way as to provide smooth and dense surface layers while maintaining a low density central portion. Thus, the dense surface layers provide the hard, durable outer surfaces needed for a refrigerator wall, and the low density central portion provides the needed thermal insulation. These PPO/PS polymer foam boards would thus form refrigerators that are easier to manufacture and require less capital investment than conventional refrigerators. In addition, the production line would be more easily adaptable to other models than is currently the case. Accordingly, there is much interest in using PPO/PS polymer foam boards in refrigerators.

However, PPO/PS polymer foam must match the thermal performance of polyurethane foam to be commercially viable as a material used in refrigerators. The thermal conductivity of conventional PPO/PS polymer foam with a chlorofluorocarbon (CFC) blowing agent is believed to be about 50% greater than that of polyurethane foam. Thus, there is a need to provide a method and apparatus for producing PPO/PS polymer foam having a substantially lower thermal conductivity.

### Summary of the Invention

The present invention meets the above-defined need by increasing the cell gas concentration in the PPO/PS polymer foam. In other words, since a foam is a dispersion of gas (the blowing agent) in a liquid or solid material wherein the liquid or solid material defines cell walls and the gas becomes the contents of the cells, the thermal conductivity of the foam is lowered by increasing the concentration of the gas in the foam cells. The present invention includes an extruder having a container for feeding polymer pellets to the extruder and a means for injecting the blowing agent into the extruder. The cell gas concentration is increased by purging air from the polymer pellet container. The air purge is accomplished by injecting a high molecular weight gas into the container via an inlet port disposed at its base. The high molecular weight gas is preferably selected from the group consisting of chlorofluorocarbons, hydrofluorocarbons, xenon, and perfluorinated fluorocarbons.

Other objects and advantages of the present invention will become apparent upon reading the following detailed description and the appended claims and upon reference to the accompanying drawings.

### Description of the Drawings

The subject matter which is regarded as the invention is particularly pointed out and distinctly claimed in the concluding portion of the specification. The invention, however, may be best understood by reference to the following description taken in conjunction with the accompanying drawing figures in which:
Figure 1 is a simplified cross-sectional representation of a conventional foam-producing extruder; and
Figure 2 is a simplified cross-sectional representation of the foam-producing extruder of the present invention.

### Detailed Description of the Invention

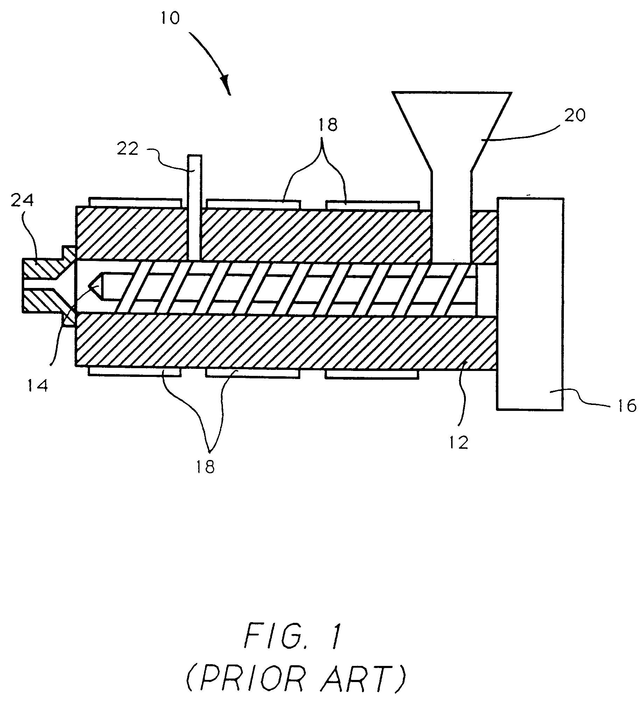

Referring to the drawings wherein identical reference numerals denote the same elements throughout the various views, Figure 1 shows a conventional extruder 10 which is used to produce polymer-based foam board. The extruder 10 comprises a long cylindrical barrel 12 with a screw 14 rotatively mounted therein. The screw 14 is rotated by a motor 16. Electrical resistance heaters 18 are disposed around the outer surface of the barrel 12 for heating material in the barrel interior. A hopper 20 is mounted near the rear of the barrel 12. The hopper 20 holds polymer, typically in the form of pellets, and provides an inlet to the interior of the barrel 12 for the polymer pellets. A liquid injection port 22 is provided near the front of the barrel 12. The liquid injection port 22 provides for the injection of the foam blowing agent, in liquid form, into the interior of the barrel 12. A die 24 is situated at the front end of the barrel 12. The die 24 forms the melt into a shape closely related to that of the final product. Thus, for forming foam boards, the die 24 has a narrow slot through which the melt exits.

In operation, the polymer pellets enter the extruder barrel 12 from the hopper 20. The rotating screw 14 conveys the pellets forward and presses them against the barrel 12. Thus, the screw rotation, along with heat from the heaters 18, melts and mixes the polymer. Next, the liquid blowing agent, typically a CFC or hydrocarbon material, is injected into the barrel 12 via the injection port 22. The rotation of the screw 14 thoroughly mixes the liquid blowing agent with the polymer melt to cause a solution. This solution is maintained at a high pressure, typically in the range of around 10,000 psi. The high pressure forces the solution out of the die 24. As the high pressure solution exits the extruder 10 through the narrow slot of the die 24, it is exposed to atmospheric pressure and rapidly expands. This expansion causes the liquid blowing agent to gasify, thus forming the foam structure of polymer cell walls and gaseous cell contents.

Cell gas concentrations in PPO/PS polymer foams produced by the extrusion process described above have been measured to be about 50% air and 50% blowing agent. Since air thermal conductivity is much greater than the thermal conductivity of the materials typically used for blowing agents, the high air content in the foam cells is the reason conventional PPO/PS polymer foam has such a high thermal conductivity. The source of the air in the PPO/PS polymer foam board is believed to be the air in the interstitial spaces in the polymer pellets within the hopper 20. Thus, the present invention proposes to purge air from the hopper by injecting a high molecular weight gas into the bottom region of the hopper, thereby preventing the extruder from ingesting air along with the polymer pellets and significantly raising the cell gas concentration of the resulting foam.

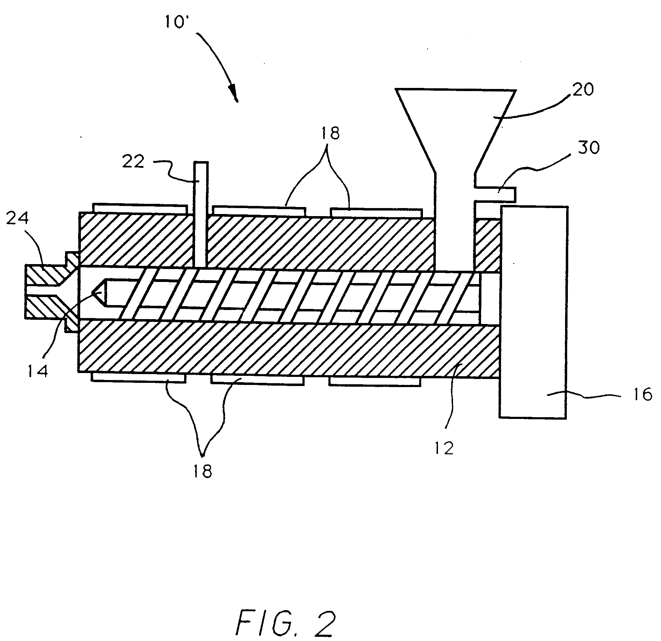

Figure 2 shows an extruder 10' of the present invention which provides for the air purge described above. Specifically, the extruder 10' comprises a barrel 12, a screw 14, a motor 16, electrical resistance heaters 18, a hopper 20, a liquid injection port 22, and a die 24 just as the extruder 10 of Figure 1. These elements function in the same manner as those described above with respect to the device of Figure 1. The extruder 10' is different in that it also includes a gas injection port 30 disposed in the lower portion of the hopper 20 near the barrel 12. The gas injection port 30 provides for the injection of a high molecular weight gas which has a low thermal conductivity into the hopper 20. The injected gas forces any air in the spaces between the polymer pellets out through the top of the hopper 20, thereby purging the pellets of air. Thus, the low thermal conductivity gas, not air, is ingested by the extruder 10' with the polymer pellets, thereby resulting in a foam board which contains very little air.

High molecular weight gases are selected because, generally, the higher the molecular weight of a gas, the lower its thermal conductivity will be. Preferred high molecular weight gases for the present invention include chlorofluorocarbons such as R-11 (trichlorofluoromethane), R-12 (dichlorodifluoromethane) and R-22 (chlorofluoromethane), hydrofluorocarbons such as HFC 356 (C₄H₄F₈), perfluorinated fluorocarbons, and xenon.

A number of foam boards were made on an experimental basis to illustrate the effectiveness of the present invention. Three of the examples are set forth in Table I below. The table shows the make-up of each example with regard to the types of polymer and blowing agents used. Example 1 consisted of polyurethane (PU) blown with trichlorofluoromethane. While polyurethane foam is not typically extruded, this is the type of foam board most commonly used in current refrigerators and is thus included as a reference. The foam boards extruded for Examples 2 and 3 were both made from the PPO/PS polymer. In each case the polymer was blended at a ratio of 25 percent PPO to 75 percent PS by mass. Each of Examples 2 and 3 used dichlorodifluoromethane for the blowing agent. The difference between the foam boards of Examples 2 and 3 is that Example 3 was produced with an injection of dichlorodifluoromethane gas into the hopper of the experimental extruder in accordance with the present invention while Example 2 was produced without the gas injection. The resulting characteristics are shown below in Table I which shows the approximate cell gas content by mole fraction, the effective thermal conductivity in Btu in/hr ft² F, and the density in lbm/ft³. The term "effective" thermal conductivity is used because these values include the effect of any heat transport due to radiation. It should be noted that since the sample foam boards were produced on an experimental, lab-scale extruder, the pressure in the extruder and the expansion rate of the melt exiting the extruder could not well controlled. Accordingly, the density of the resulting foam boards was not consistently controlled.

**TABLE I**

| Example | Polymer | Blowing Agent | Approximate Gas Content (Mole Fraction) | Effective Thermal Conductivity (Btu in/hr ft² F) | Density (lbm/ft³) |
|---|---|---|---|---|---|
| 1 | PU | R-11 | 0.61 | 0.11 | 1.71 |
| 2 | 25/75 PPO/PS | R-12 | 0.48 | 0.17 | 2.37 |
| 3 | 25/75 PPO/PS | R-12 | 0.88 | 0.15 | 3.87 |

As can be seen from the table, the thermal conductivity for Example 3 is less than that for Example 2 despite the fact that Example 3 turned out to be significantly denser than Example 2 for the reasons stated above. The thermal conductivity of Example 3 also compared favorably to that of the standard polyurethane foam board of Example 1. Thus, it can be seen that PPO/PS polymer foam boards can be produced which have excellent thermal conductivities, particularly on production-quality extruders where density can be well controlled.

The foregoing has described a method and apparatus for reducing the thermal conductivity of PPO/PS polymer foam which increases the cell gas concentration of the foam by injecting a high molecular weight gas into the source of polymer.

While specific embodiments of the present invention have been described, it will be apparent to those skilled in the art that various modifications thereto can be made without departing from the spirit and scope of the invention as defined in the appended claims. For instance, although the present invention has been described in connection with a single-screw extruder, it is equally applicable to most other types of molding devices, such as multiple-screw extruders.

## Claims

1. A method for making a low thermal conductivity foam comprising the steps of:
providing a container of polymer material;
purging air from said container;
transmitting polymer from said container into an extruder;
melting said polymer in said extruder;
mixing a blowing agent with said melted polymer in said extruder ; and
extruding the mixture from said extruder.

2. The method of claim 1 wherein said step of purging air comprises injecting a high molecular weight gas into said container.

3. The method of claim 2 wherein said high molecular weight gas is selected from the group consisting of chlorofluorocarbons, hydrofluorocarbons, xenon, and perfluorinated fluorocarbons.

4. An extruder comprising:
a barrel;
a container for holding polymer pellets, said container being connected to said barrel for feeding pellets to said barrel; and
means for injecting a high molecular weight gas into said container.

5. The extruder of claim 4 wherein said means for injecting a high molecular weight gas comprises an inlet port disposed at the base of said container.
